# EUROPEAN PATENT APPLICATION

(11) **EP 3 462 402 A1**
(43) Date of publication of application: **03.04.2019**
(21) Application number: 17193491.2
(22) Date of filing: 27.09.2017
(51) Int. Cl.: G06Q 40/02, G06Q 30/02

(54) **IMPROVED MORTGAGE PRICING**

(71) Applicant: KBC Groep NV, 1080 Brussel (BE)
(72) Inventor: FRIEDMAN, Mike, 3001 Heverlee (BE); VAN ROMPAYE, Bart, 3293 Kaggevinne (BE); VANDEPUT, Marc, 3500 Hasselt (BE); CHIZI, Barak, 1150 Woluwe (BE)
(74) Representative: Brantsandpatents bvba

(57) **Abstract**

The current invention relates to a computing system for allocating a discount to a mortgage request, said computing system comprising a server, the server comprising a processor, tangible non-volatile memory, program code present on said memory for instructing said processor, optionally a network interface; at least one computer-readable medium, said computer-readable medium comprising a plurality of discount rules, at least one price-sensitivity model parameter, at least one customer-lifetime-value model parameter and optionally a database; said computing system configured for carrying out a method for said allocating of said discount.

## Description

### Technical field

The invention pertains to the technical field of mortgage pricing by issuers of mortgages such as banks.

### Background

There remains a need in the art for an improved way of mortgage pricing. Automated mortgage pricing is a process to automatically determine a price and/or discount based on one or more factors.

EP 1 915 735 describes an automatic method, system and computer program for evaluating a price. A price sensitivity effect the price is accounted for where increasing the price has a tendency to decrease an acceptance rate. An adverse selection effect of the price is accounted for where increasing the price has a tendency to increase a risk. The price is automatically evaluated based at least in part on the price sensitivity effect and the adverse selection effect. As such the price is automatically evaluated partially based on the price sensitivity effect and adverse selection effect. Increasing the price has a tendency to decrease the acceptance rate and increase a risk. Hereby, EP 1 915 735 lacks means to take into account data regarding customers.

US 2002/0052836 describes a method and apparatus for determining the prepayment propensity of individual borrowers. Early payment of debt instruments, such as loans and leases, can lead to losses being suffered by lenders. The present invention analyzes the demographics associated with a particular borrower to determine both the individual and group based prepayment propensity. The history of the borrower, the history of the borrower's demographic group, interest rate trends and other factors are then used to calculate a prepayment score that can be used by the lender to determine the propensity of a given borrower to prepay the instrument in question. The score of the individual borrower can be used to estimate the profitability of a debt instrument and allow the lender to make appropriate adjustments prior to issuing the instrument. The individual prepayment scores of a lender's or broker's clients can also be used to rate the lender or broker. Hereby, US 2002/0052836 does not disclose nor hint upon taking into account price sensitivity in the determination of mortgage prices.

The present invention aims to resolve at least some of the problems mentioned above.

### Summary of the invention

The overall aim of the present invention is to allow an issuer of mortgage loans to realize higher efficiency in granting discounts on mortgage loans to individual customers and prospects. This is realized by offering higher discounts to customers that are more price-sensitive and more valuable to the issuer of the mortgage loans, and smaller discounts to customers that are less price-sensitive and/or less valuable to the issuer of the mortgage loans. This allows to increase said efficiency by increasing the effectiveness of granted discounts while at the same time reducing the number and/or size of discounts granted.

Particularly, the present invention provides a computing system for allocating a discount to a mortgage request, said computing system comprising
- a server, the server comprising a processor, tangible non-volatile memory, program code present on said memory for instructing said processor, optionally a network interface;
- at least one computer-readable medium, said computer-readable medium comprising a plurality of discount rules, at least one price-sensitivity model parameter, at least one customer-lifetime-value model parameter and optionally a database;
said computing system configured for carrying out a method for said allocating of said discount, said method comprising the steps of:
(a) receiving said mortgage request from a customer by said server, said mortgage request comprising request data;
(b) calculating price-sensitivity data based on said request data and said at least one price-sensitivity model parameter by said server, said price-sensitivity data comprising a price-sensitivity score;
(c) calculating customer-lifetime-value data based on said request data and said at least one customer-lifetime-value model parameter by said server, said customer-lifetime-value data comprising a customer-lifetime-value score;
(d) allocating said discount to said mortgage request according to said plurality of discount rules, said plurality of discount rules comprising at least one discount rule taking into account said price-sensitivity data and at least one discount rule taking into account said customer-lifetime-value data.

Hereby, said customer may concern a person that is already a customer of the issuer of said mortgage loans, but may as well concern a prospect, i.e. a potential customer with no link to the issuer other than the involvement in a mortgage request. Furthermore, in a preferred embodiment the mortgage relates to an offer comprising a quote price, and the allocating of said discount in step (d) preferably relates to the delivering of said offer to the customer, wherein the quote price is adjusted in accordance with said discount.

The advantage of such a system is that it allows an issuer of mortgage loans, as business user of the system, to realize higher efficiency in granting discounts on mortgage loans to individual customers. This is realized by offering higher discounts to customers that are more price-sensitive and more valuable to the issuer of the mortgage loans, and smaller discounts to customers that are less price-sensitive and/or less valuable to the issuer of the mortgage loans. This allows to increase said efficiency by increasing the effectiveness of granted discounts while at the same time reducing the number and/or size of discounts granted. By jointly taking into account both the factor of price sensitivity and the factor of customer lifetime value, better efficiency can be realized than if only one of both factors were accounted for.

Another advantage of the system lies in the automated processing of the mortgage request, reducing the burden on employees of the issuer of the mortgages and/or providing the customer with a more complete service.

Related, the system advantageously allows a more generic and therefor more impartial handling of discount allocation across mortgage requests, which is beneficial for the issuer of the mortgages from an operational and strategic perspective.

A further advantage of the system is that it conveniently allows implementing changes in business strategy regarding discounts. Since the plurality of discount rules can be altered centrally by the issuer of the mortgages, e.g. by a business user, any new business strategy can be implemented straight away and can be implemented in the entire organization at the same time.

In a second aspect, the present invention provides a use of the computing system for allocating a discount to a mortgage request according to the present invention by a mortgage issuer to generate a mortgage offer for a customer of said mortgage issuer. The advantages of such use are similar to those of the system.

Further preferred embodiments and their advantages are discussed in the detailed description and the claims.

### Description of figures

Figure **1** shows an example system overview illustrating the present invention.
Figure 2 shows an example workflow relating to the present invention.
Figure 3 shows an example relation between predicted acceptance and discount for an individual customer.
Figure 4 illustrates example system aspects relevant to customer-lifetime-value calculation.

### Detailed description of the invention

The present invention concerns a system and use of said system for allocating a discount to a mortgage request.

In this document, the term "customer" refers to a party requesting a mortgage. This may concern an individual or a slightly larger group, e.g. a family, or an even larger group, e.g. a company. In this document, the term "customer" may refer to an individual who is already an official customer with the issuer of mortgage loans, but it may as well concern a prospect. The term mortgage request refers to a request by a customer directed at an issuer with the aim of obtaining a mortgage offer. The mortgage offer is issued by the issuer and preferably comprises a certain discount as determined by the system according to the present invention. The customer may or may not accept the mortgage offer, corresponding to a non-take event or a take event, respectively. The term "issuer" refers to the party receiving mortgage requests from customers and/or the party issuing mortgage offers to customers and/or the party issuing mortgages. In a preferred embodiment, the term "issuer" refers to the party handling all of said activities, i.e. the issuer is the party receiving mortgage requests from customers, the party issuing mortgage offers to customers and the party issuing mortgages. The issuer may for instance be a bank, insurance company or insurance broker. The term "business user" is used for an employee, affiliate or any other party qualified to act on behalf of the issuer and operating the system. The term "discount" may refer to a financial discount expressed in a currency, e.g. Euro, but may also be expressed in terms of the interest rate of the mortgage product, e.g. in basis points or base points, abbreviated as "bp", amounting to one hundredth of a percent.

Furthermore, in this document, the terms "churn", "churn probability" and "churn rate" are used interchangeably and refer to the probability that a customer belonging to the customer base of the issuer leaves the company during a given time period/horizon, e.g. 5 years. Churn is a possible indicator of customer dissatisfaction, more attractive offers from competition, and also relates to the customer lifetime. Related, the "customer lifetime" refers to the time spent by customers in the customer base of the issuer. Hereby, the average customer lifetime may preferably be equal to the inverse of the churn probability, e.g. a churn probability of 0.2 implies an average customer lifetime of 5 years. The term "customer-lifetime-value score" is an umbrella term comprising the "value-at-risk score".

In a first aspect, the present invention provides a computing system for allocating a discount to a mortgage request, said computing system comprising
- a server, the server comprising a processor, tangible non-volatile memory, program code present on said memory for instructing said processor, optionally a network interface;
- at least one computer-readable medium, said computer-readable medium comprising a plurality of discount rules, at least one price-sensitivity model parameter, at least one customer-lifetime-value model parameter and optionally a database;
said computing system configured for carrying out a method for said allocating of said discount, said method comprising the steps of:
(e) receiving said mortgage request from a customer by said server, said mortgage request comprising request data;
(f) calculating price-sensitivity data based on said request data and said at least one price-sensitivity model parameter by said server, said price-sensitivity data comprising a price-sensitivity score;
(g) calculating customer-lifetime-value data based on said request data and said at least one customer-lifetime-value model parameter by said server, said customer-lifetime-value data comprising a customer-lifetime-value score;
(h) allocating said discount to said mortgage request according to said plurality of discount rules, said plurality of discount rules comprising at least one discount rule taking into account said price-sensitivity data and at least one discount rule taking into account said customer-lifetime-value data.

Hereby, said price-sensitivity data relates to the extent to which a price reduction of said mortgage leads to a probability increase of acceptance of said mortgage by said customer. Particularly, the price-sensitivity score provides a quantitative measure which is indicative of said extent, and may in one embodiment for instance be equal to a first derivative of a linear function approximating the increase of said probability as function of the price reduction. Furthermore, said customer-lifetime-value data relates to a projection of a gross profit that said customer may bring to an issuer of said mortgage. Typically, this projection relates to one or more pre-determined time horizons, e.g. 1, 2, 3, 4 and/or 5 years. Hereby, the customer-lifetime-value score is a quantitative measure thereof, and may in one embodiment for instance concern a set of scores expressed in Euro or any other currency, with one value per pre-defined time horizon, e.g. 1, 2 and 5 years. Furthermore, said at least one discount rule taking into account said price-sensitivity data preferably is such that the resulting discount is increasing, and even more preferably, non-decreasing, as function of increasing price-sensitivity score. Likewise, said at least one discount rule taking into account said customer-lifetime-value data preferably is such that the resulting discount is increasing, and even more preferably, non-decreasing, as function of increasing customer-lifetime-value score.

As said, a first advantage of such a system is that it allows an issuer of mortgage loans, as business user of the system, to realize higher efficiency in granting discounts on mortgage loans to individual customers

Another advantage of the system lies in the automated processing of the mortgage request, reducing the burden on employees of the issuer of the mortgages. In one embodiment, an employee may assist the customer in providing the mortgage request to the system. In such case, the system is advantageous in that it relieves the employee of the burden of listing adequate questions for the customer and calculating the discount. In another embodiment, the customer may seek access to the system directly, e.g. via a web interface. This may concern the original system but may also concern a stripped-down version of the system, where only part of the functionality is available and/or where only a rough indication of whether a discount can be allocated can be obtained. In such case, the advantage of the system is that it may provide the customer with information regarding discounts also outside regular office hours, which is consistent with the information that may be provided in a follow-up meeting with an employee of the issuer.

Another advantage of the system lies in the automated processing of the mortgage request, reducing the burden on employees of the issuer of the mortgages and/or providing the customer with a more complete service. In one embodiment, an employee may assist the customer in providing the mortgage request to the system.

In such case, the system is advantageous in that it relieves the employee of the burden of listing adequate questions for the customer and calculating the discount. In another embodiment, the customer may seek access to the system directly, e.g. via a web interface. This may concern the original system but may also concern a stripped-down version of the system, where only part of the functionality is available and/or where only a rough indication of whether a discount can be allocated can be obtained. In such case, the advantage of the system is that it may provide the customer with a more complete service, with information regarding discounts also outside regular office hours, which is consistent with the information that may be provided in a follow-up meeting with an employee of the issuer.

As mentioned earlier, preferably, said at least one discount rule taking into account said price-sensitivity data is such that the resulting discount is increasing, and even more preferably, non-decreasing, as function of increasing price-sensitivity score. Likewise, said at least one discount rule taking into account said customer-lifetime-value data preferably is such that the resulting discount is increasing, and even more preferably, non-decreasing, as function of increasing customer-lifetime-value score. In a preferred embodiment, a single discount rule is used to take into account said price-sensitivity data and said customer-lifetime-value data, whereby the rule is preferably function of at least said price-sensitivity score and said customer-lifetime-value score. This function may incorporate both scores via a simple linear sum, but it may also incorporate the scores via a non-linear expression such as a product of both scores.

In a preferred embodiment, said customer-lifetime-value score calculated in step (c) is based at least partly on a company-related value score of a company to which said customer relates, said customer preferably owning said company. This is advantageous since it allows to take into account the relation that the issuer builds up with customers over time with the company. Hereby, for instance a customer owning a company should preferably receive a discount that is larger to the extent that the company is larger.

In another preferred embodiment, said customer-lifetime-value score calculated in step (c) is based at least partly on a churn probability relating to said customer and/or said company. This is advantageous since it generically addresses the problem of churn or churn rate of a customer base, which provides for a known and trackable quantitative measure.

In yet another embodiment, said calculating in step (c) comprises determining a non-take probability associated with a non-take event wherein said customer does not accept a mortgage offer relating to said mortgage request, wherein said customer-lifetime-value score calculated in step (c) is based at least partly on a customer-related value score and/or said company-related value score associated with said non-take event. This is advantageous since it takes into account that even customers not accepting/taking the mortgage, e.g. due to a discount that is insufficiently high, may remain within the customer base and provide for value for the issuer as customers and/or through their companies. Hereby, for a given customer, the customer-lifetime-value score in the event of not taking the mortgage is preferably not larger and more preferably lower than the score in the event of taking the mortgage.

According to another preferred embodiment, said price-sensitivity score calculated in step (b) is based at least partly on any or any combination of the following: demographics (such as age, profession, links with legal entities, among others), product possession (such as number of current accounts, number of credit cards, among others), product usage (such as turnover on current account, personal loan balance, among others), wealth indicators (such as gross income, among others), inbound and outbound contacts (calls, website usage, among others).

In yet another embodiment, said computer-readable medium comprises a plurality of price-sensitivity segments; wherein said allocating in step (d) comprises assigning said customer to one of said plurality of price-sensitivity segments according to a price-sensitivity discount rule belonging to said plurality of discount rules, said price-sensitivity discount rule taking into account said price-sensitivity score. This is advantageous since it allows transparency for the issuer, e.g. business users that operate the system. Related, it allows to involve the price-sensitivity in the corporate strategy of the issuer, by setting discount rules according to segments. Related, in another embodiment that may or may not be combined herewith, said computer-readable medium comprises a plurality of customer-lifetime-value segments; wherein said allocating in step (d) comprises assigning said customer to one of said plurality of customer-lifetime-value segments according to a customer-lifetime-value discount rule belonging to said plurality of discount rules, said customer-lifetime-value discount rule taking into account said customer-lifetime-value score. This is advantageous for similar reasons, i.e. it allows transparency for the issuer, e.g. business users that operate the system. Related, it allows to involve the price-sensitivity in the corporate strategy of the issuer, by setting discount rules according to segments. In a related further preferred embodiment with price-sensitivity segments and customer-lifetime-value segments, said discount allocated in step (d) is based at least partly on a reference discount associated with a combination of said assigned price-sensitivity segment and said assigned customer-lifetime-value segment. This is advantageous because it allows a transparent and simple definition of business goals and strategy in terms of said reference discounts. In a more preferred embodiment, each of said plurality of price-sensitivity segments is stored as a plurality of price-sensitivity thresholds, each segment is defined by at least a lower or upper threshold over the range of possible price-sensitivity scores, thereby segmenting the latter range such that each price-sensitivity segment is non-overlapping with any other price-sensitivity segment. Likewise, in a more preferred embodiment, each of said plurality of customer-lifetime-value segments is stored as a plurality of customer-lifetime-value thresholds, each segment is defined by at least a lower or upper threshold over the range of possible customer-lifetime-value scores, thereby segmenting the latter range such that each customer-lifetime-value segment is non-overlapping with any other customer-lifetime-value.

According to another preferred embodiment, said computer-readable medium comprises a database, said database comprising historical mortgage application data and optionally historical customer data and/or historical market data; wherein said historical mortgage application data comprises a plurality of historical mortgage applications of which at least one comprises a historical mortgage application interest rate and a historical mortgage application discount; and wherein said computing system is further configured for carrying out a method for reconfiguring said at least one price-sensitivity model parameter and/or said plurality of discount rules, said method comprising the steps of
(i) retrieving historical mortgage application data and optionally historical customer data and/or historical market data from said database according to a price-sensitivity query, wherein said price-sensitivity query is optionally determined at least partly by said plurality of discount rules;
(ii) processing the data retrieved in step (i) according to a price-sensitivity model, obtaining a reconfigured value for at least one of said at least one price-sensitivity model parameter and/or a reconfiguration for at least one of said plurality of discount rules.

This is advantageous because such a system is able to adapt its mode of calculation to earlier experience, thereby automatically learning from historical data. Hereby, the outcome of step (ii) has immediate impact on the mode of calculation in step (b), leading to enhanced price-sensitivity calculation. In a more preferred embodiment, said price-sensitivity model applied in step (ii) comprises a statistical or machine learning model such as random forest, gradient boosting or neural networks. Particularly random forest is found adequate for the purpose of handling the typically large amount of data retrieved in step (i).

According to yet another preferred embodiment, said computer-readable medium comprises a database, said database comprising historical customer data and optionally historical mortgage application data and/or historical market data; wherein said historical customer data relating to historical activity of at least one customer with the issuer of said mortgage request; and wherein said computing system is further configured for carrying out a method for reconfiguring said at least one customer-lifetime-value model parameter and/or said plurality of discount rules, said method comprising the steps of
(I) retrieving historical customer data and optionally historical mortgage application data and/or historical market data from said database according to a customer-lifetime-value query, wherein said customer-lifetime-value query is optionally determined at least partly by said plurality of discount rules;
(II) processing the data retrieved in step (i) according to a customer-lifetime-value model, obtaining a reconfigured value for at least one of said at least one customer-lifetime-value model parameter and/or a reconfiguration for at least one of said plurality of discount rules.

This has similar advantages of allowing the system to adapt its mode of calculation to earlier experience, thereby automatically learning from historical data. Hereby, the outcome of step (ii) has immediate impact on the mode of calculation in step (c), leading to enhanced customer-lifetime-value calculation.

In another preferred embodiment, said computing system is further configured for carrying out a method for generating a discount simulation, said method comprising the steps of
(01) receiving at least one simulation-related parameter from a business user;
(02) optionally, generating an instruction based on said at least one simulation-related parameter for said reconfiguring of said at least one price-sensitivity model parameter and/or for said reconfiguring of said at least one customer-lifetime-value model parameter;
(03) based on said simulation-related parameter and optionally based on said instruction generated in step (02), generating a discount simulation comprising at least one simulated price-sensitivity score and/or at least one simulated customer-lifetime-value score.

The advantage hereof lies in the interaction it allows between the system and a business user, which is in need of insights regarding possible discount rules before actually applying these discount rules.

In yet another embodiment, said server comprises a network interface; and wherein at least part of said database is connected to said server via said network interface. This is advantageous since it allows the system to connect to remote databases, which may be operated by the issuer or by a third party. In the latter case, the data may be offered e.g. freely or on a subscription basis.

The invention is further described by the following non-limiting examples which further illustrate the invention, and are not intended to, nor should they be interpreted to, limit the scope of the invention.

### Examples

### Example 1: Example system overview

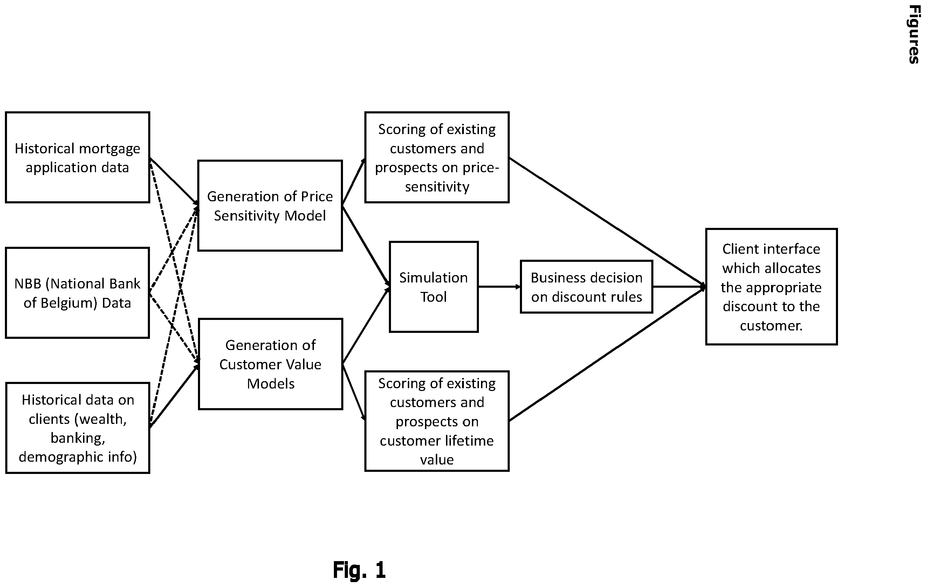

Figure 1 shows an example system overview illustrating the present invention. The example system allows automated allocation of mortgage discounts. The discounts relate to mortgage requests from customers and/or prospects. The system is configured by means of stochastic models. The stochastic models are used to segment customers according to price-sensitivity and customer-lifetime-value. The segments, together with appropriate scores for price-sensitivity and customer-lifetime-value, allow to allocate discounts for mortgages in an automated fashion.

The system makes use of historical data to model the process of accepting a mortgage, and to model the evolution of revenue generated by the client after completing a mortgage negotiation, among existing customers of the issuer of the mortgage.

There are two primary customer characteristics which are modeled in the system: price-sensitivity and customer-lifetime-value. The models which underlie the estimates of these characteristics are integrated into a simulation tool which is used to predict the impact of pricing decisions made by business.

Price-sensitivity refers to the extent to which granting additional levels of discount on a mortgage offer will lead to increased probability of acceptance by the mortgage applicant. The system uses historical data of mortgage applications issued by the issuer of the mortgages, data on market conditions from an external source, preferably an official financial institute such as a country's central bank, and data on customers (financial situation, product ownership and demographic information) to model the process of mortgage acceptance. These models allow to produce a price-sensitivity score for mortgage applicants, wherein individuals with high (low) scores are more (less) price-sensitive.

Customer-lifetime-value refers to the projection of the gross profit that a given individual is likely to bring, within a given time horizon. The historical data used comprises information on customers' financial situation, product ownership and demographic information, data on market conditions from the external source, and data on the mortgage application process to model this process. The models allow to produce a customer-lifetime-value score for mortgage applicants, wherein individuals with high (low) scores are projected to bring in more (less) profit for the bank within a 5-year time period.

A simulation tool integrates the above-mentioned models. As such, the simulation tool brings together insights in mortgage acceptance, price-sensitivity and customer-lifetime-value. Business users can input hypothetical scenarios regarding market circumstances, internal prices, and discounts given to customer segments such as those defined by the price-sensitivity and customer-lifetime-value scores. These hypothetical scenarios are passed through the models in order to give projections of the outcomes (e.g. number of sales, margin, revenue per segment etc.) that can be expected based on the input parameters. These projections are then used to define discount rules for existing and new segments, including those defined by the price-sensitivity and customer-lifetime-value scores described above.

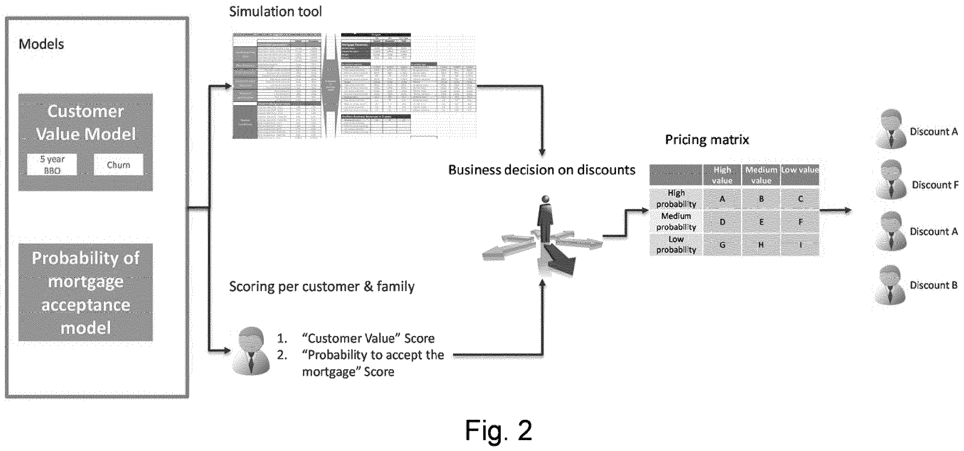

Figure 2 shows an example workflow relating to the present invention. The models for customer-lifetime-value and price-sensitivity (and the resulting probability of acceptance) provide the input to the overall system.

On the one hand, the simulation tool allows to calculate results for hypothetical scenarios. This facilitates a business user in defining new discount rules. The actions performed on discount rules may comprise setting new discount values for existing segments, but may also comprise altering the segment thresholds defining the segments. Hereby, each segment is preferably stored as one or two thresholds, whereby each segment is defined by at least a lower or upper threshold over the range of possible scores, thereby segmenting the latter range such that each segment is non-overlapping with any other segment.

On the other hand, the system processes customer input data to determine a customer-lifetime-value score and a price-sensitivity score (or, equivalent, a "probability to accept the mortgage" score"). By determining these scores, the system is able to assign a user to both a price-sensitivity segment and a customer-lifetime-value segment, according to the discount rules that are in place. The discount rules related to price-sensitivity segments and customer-lifetime-value segments may be conveniently summarized by means of a pricing matrix indicating, for each combination of price-sensitivity segment and customer-lifetime-value segment, a label for the reference discount that should be allocated. Resulting, different customers receive discounts which may under a certain label A-I.

### Example 2: Example of price-sensitivity calculation

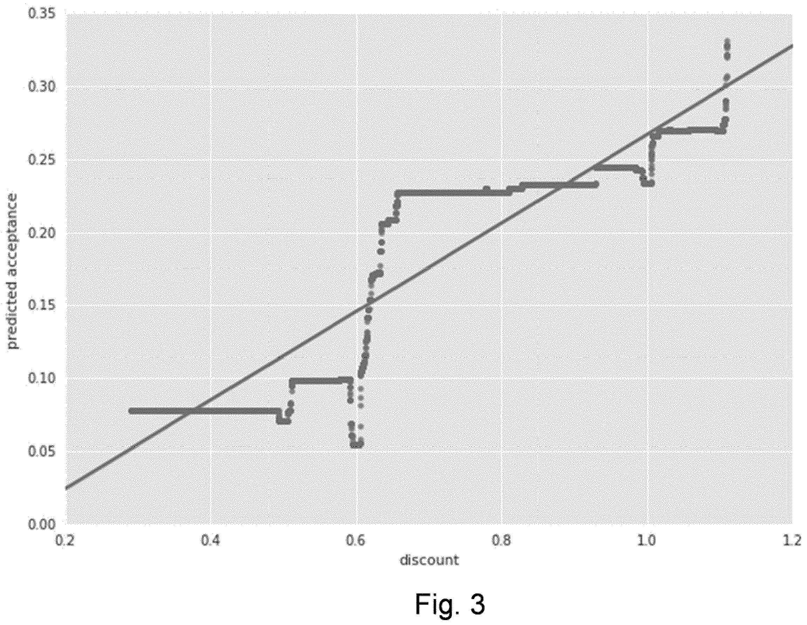

Figure 3 shows an example relation between predicted acceptance and discount for an individual customer. Particularly, the probability of acceptance of the mortgage by the customer is calculated by means of the price-sensitivity model and is plotted for 10000 discounts. For each dot, the predicted acceptance is calculated for the given discount. As can be expected, the predicted acceptance on average increased with increasing discount. This is reflected by the positive first derivative of the trend line displayed in Figure 3. The trend line is obtained from linear regression, e.g. based on a Least Square Error criterion or a Least Absolute Error criterion. In this example, the price-sensitivity score is based immediately on said first derivative of said trend line, the so-called "slope per person". These first derivatives are rank-percentiled within the population of interest to calculate the final price-sensitivity scores.

### Example 3: Example of customer-lifetime-value calculation

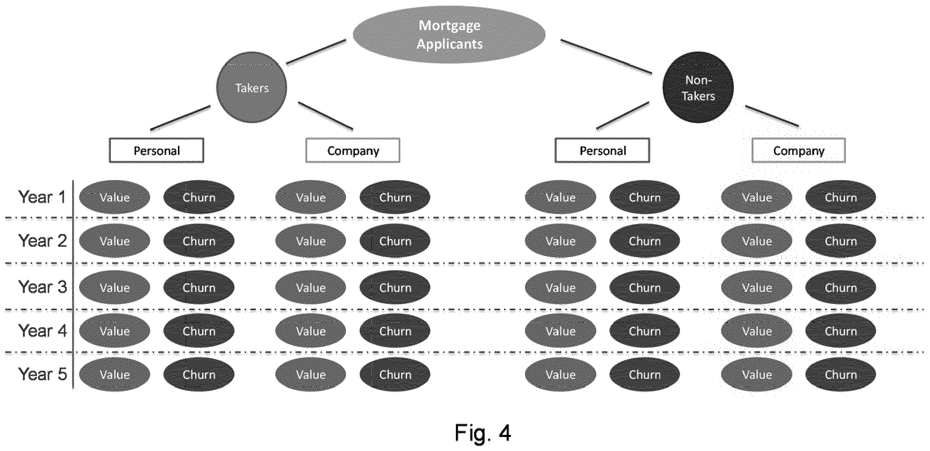

Figure 4 illustrates example system aspects relevant to customer-lifetime-value calculation.

For each customer or, equivalently, mortgage applicant, separate models are determined for 1, 2, 3, 4 and 5 year time horizons. Furthermore, for each customer, there is a differentiation between the non-take event and the take event, as well as a differentiation between value and churn relating to the customer (person) and the one or more company to which the customer relates, e.g. the company owned by the customer.

The value relating to the individual customer is based on the sum of gross profit of the customer and all related trusts within a given time period.

The value relating to the company is based on the sum of the gross profit of companies with first and second degree relationships to a given customer within a given time period.

For each time horizon, estimates are produced for customer value and likelihood of customer churn. The final value score is calculated by weighting the value estimates by weighting the value estimates by the probability of churn estimates.

## Claims

1. A computing system for allocating a discount to a mortgage request, said computing system comprising
- a server, the server comprising a processor, tangible non-volatile memory, program code present on said memory for instructing said processor, optionally a network interface;
- at least one computer-readable medium, said computer-readable medium comprising a plurality of discount rules, at least one price-sensitivity model parameter, at least one customer-lifetime-value model parameter and optionally a database;
said computing system configured for carrying out a method for said allocating of said discount, said method comprising the steps of:
(a) receiving said mortgage request from a customer by said server, said mortgage request comprising request data;
(b) calculating price-sensitivity data based on said request data and said at least one price-sensitivity model parameter by said server, said price-sensitivity data comprising a price-sensitivity score;
(c) calculating customer-lifetime-value data based on said request data and said at least one customer-lifetime-value model parameter by said server, said customer-lifetime-value data comprising a customer-lifetime-value score;
(d) allocating said discount to said mortgage request according to said plurality of discount rules, said plurality of discount rules comprising at least one discount rule taking into account said price-sensitivity data and at least one discount rule taking into account said customer-lifetime-value data.

2. The computing system according to claim 1, wherein said customer-lifetime-value score calculated in step (c) is based at least partly on a company-related value score of a company to which said customer relates, said customer preferably owning said company.

3. The computing system according to any of claims 1-2, wherein said customer-lifetime-value score calculated in step (c) is based at least partly on a churn probability relating to said customer and/or said company.

4. The computing system according to any of claims 1-3, wherein said calculating in step (c) comprises determining a non-take probability associated with a non-take event wherein said customer does not accept a mortgage offer relating to said mortgage request, and wherein said customer-lifetime-value score calculated in step (c) is based at least partly on a customer-related value score and/or said company-related value score associated with said non-take event.

5. The computing system according to any of claims 1-4, wherein said price-sensitivity score calculated in step (b) is based at least partly on any or any combination of the following: demographics relating to said customer, product possession relating to said customer, product usage relating to said customer, wealth indicators relating to said customer, inbound and outbound contacts relating to said customer.

6. The computing system according to any of claims 1-5, wherein said computer-readable medium comprises a plurality of price-sensitivity segments; wherein said allocating in step (d) comprises assigning said customer to one of said plurality of price-sensitivity segments according to a price-sensitivity discount rule belonging to said plurality of discount rules, said price-sensitivity discount rule taking into account said price-sensitivity score.

7. The computing system according to any of claims 1-6, wherein said computer-readable medium comprises a plurality of customer-lifetime-value segments; wherein said allocating in step (d) comprises assigning said customer to one of said plurality of customer-lifetime-value segments according to a customer-lifetime-value discount rule belonging to said plurality of discount rules, said customer-lifetime-value discount rule taking into account said customer-lifetime-value score.

8. The computing system according to claim 6 and 7, wherein said discount allocated in step (d) is based at least partly on a reference discount associated with a combination of said assigned price-sensitivity segment and said assigned customer-lifetime-value segment.

9. The computing system according to any of claims 1-8, wherein said computer-readable medium comprises a database, said database comprising historical mortgage application data and optionally historical customer data and/or historical market data; wherein said historical mortgage application data comprises a plurality of historical mortgage applications of which at least one comprises a historical mortgage application interest rate and a historical mortgage application discount; and wherein said computing system is further configured for carrying out a method for reconfiguring said at least one price-sensitivity model parameter and/or said plurality of discount rules, said method comprising the steps of
(i) retrieving historical mortgage application data and optionally historical customer data and/or historical market data from said database according to a price-sensitivity query, wherein said price-sensitivity query is optionally determined at least partly by said plurality of discount rules;
(ii) processing the data retrieved in step (i) according to a price-sensitivity model, obtaining a reconfigured value for at least one of said at least one price-sensitivity model parameter and/or a reconfiguration for at least one of said plurality of discount rules.

10. The computing system according to claim 9, wherein said price-sensitivity model applied in step (ii) comprises a statistical or machine learning model such as random forest, gradient boosting or neural networks.

11. The computing system according to any of claims 1-10, wherein said computer-readable medium comprises a database, said database comprising historical customer data and optionally historical mortgage application data and/or historical market data; wherein said historical customer data relating to historical activity of at least one customer with the issuer of said mortgage request; and wherein said computing system is further configured for carrying out a method for reconfiguring said at least one customer-lifetime-value model parameter and/or said plurality of discount rules, said method comprising the steps of
(I) retrieving historical customer data and optionally historical mortgage application data and/or historical market data from said database according to a customer-lifetime-value query, wherein said customer-lifetime-value query is optionally determined at least partly by said plurality of discount rules;
(II) processing the data retrieved in step (i) according to a customer-lifetime-value model, obtaining a reconfigured value for at least one of said at least one customer-lifetime-value model parameter and/or a reconfiguration for at least one of said plurality of discount rules.

12. The computing system according to any of the claims 10-11, wherein said computing system is further configured for carrying out a method for generating a discount simulation, said method comprising the steps of
(01) receiving at least one simulation-related parameter from a business user;
(02) optionally, generating an instruction based on said at least one simulation-related parameter for said reconfiguring of said at least one price-sensitivity model parameter and/or for said reconfiguring of said at least one customer-lifetime-value model parameter;
(03) based on said simulation-related parameter and optionally based on said instruction generated in step (02), generating a discount simulation comprising at least one simulated price-sensitivity score and/or at least one simulated customer-lifetime-value score.

13. The computing system according to any of the claims 10-12, wherein said server comprises a network interface; and wherein at least part of said database is connected to said server via said network interface.

14. Use of a computing system for allocating a discount to a mortgage request according to any of the claims 1-13 by a mortgage issuer to generate a mortgage offer for a customer of said mortgage issuer.
